# EUROPEAN PATENT APPLICATION

(11) **EP 4 699 682 A1**
(43) Date of publication of application: **25.02.2026**
(21) Application number: 24195698.6
(22) Date of filing: 21.08.2024
(51) Int. Cl.: B01D 53/04, B01J 20/00, B01D 53/14

(54) **REGENERATION OF SOLID CO2 SORBENT**

(71) Applicant: Nederlandse Organisatie voor toegepast- natuurwetenschappelijk onderzoek TNO, 2595 DA 's-Gravenhage (NL)
(72) Inventor: GARCIA MORETZ-SOHN MONTEIRO, Juliana, 2595 DA 's-Gravenhage (NL)
(74) Representative: V.O.

(57) **Abstract**

The invention is directed to a method and system for adsorption of CO₂ by a solid sorbent and regeneration of said solid sorbent, wherein said method comprises the steps of: a) contacting a CO₂-lean solid sorbent with a CO₂-rich gas stream to transfer CO₂ from the CO₂-rich gas stream to the CO₂-lean solid sorbent, resulting in a CO₂-rich solid sorbent and a CO₂-lean gas stream; and b) contacting the CO₂-rich solid sorbent with a CO₂-lean liquid sorbent comprising an amine to transfer the CO₂ from the CO₂-rich solid sorbent to the CO₂-lean liquid sorbent, resulting in a CO₂-rich liquid sorbent and regeneration of the CO₂-lean solid sorbent.

## Description

The invention is in the field of CO₂ capture. In particular the invention relates to a method and system for adsorption of CO₂ by a solid sorbent and regeneration of said solid sorbent and to a method and system for capture of CO₂ using both a liquid and solid sorbent with integrated regeneration of the liquid sorbent.

It is widely acknowledged that it is desirable to minimize CO₂ emission and move towards a sustainable economy. A method to minimize emission is to capture the carbon dioxide, either by removing CO₂ from industrial flue gases, *i.e.* post-combustion CO₂ capture (PCC), or from air, *i.e.,* Direct Air Capture (DAC). A conventional method for PCC is absorption of CO₂ by utilizing liquid sorbents, in particular aqueous solutions of volatile amines (see for instance Zeeshan et al., Front. Sustain. 4:1167713, Sabatino et al., Joule 5, 2021, 1-30, US 10,010,829). The amines in the aqueous solution react with CO₂ via a nucleophilic attack, producing carbamate anions and ammonium cations. Amine based sorbents typically collect CO₂ at ambient temperatures and are regenerated by releasing CO₂ at higher temperatures. In DAC, air passes over a sorbent that selectively removes CO₂ and returns CO₂-lean air to the atmosphere. As this requires large volumes of air to be blown over the sorbent, the use of the liquid sorbent comprising the volatile amines is less favorable, as this method has the disadvantages that it may cause oxidative degradation of the amines and that a substantial amount of amine from liquid sorbent may evaporate and contaminate the CO₂-lean air stream, which is undesirable from both an economic and environmental perspective. Instead, DAC is preferably performed using non-volatile, stable solutions of hydroxides (which cannot be thermally regenerated), or by making use of solid sorbents.

It is known in the art that reactive amine groups can be bonded to solid supports in order to prevent this contamination. For example, EP2054151A1 describes a solid sorbent for adsorbing carbon dioxide from a gas mixture, comprising an amine and a nano-structured solid support.

In order to reuse the solid sorbent, it is necessary to regenerate the solid sorbent by desorbing the CO₂. As described in EP2054151A1, different regeneration methods are known, such as subjecting the CO₂-rich solid sorbent to heat, reduced pressure, vacuum, gas purge lean sweep gas or a combination thereof. However, these desorption methods are time inefficient, which is unfavorable from an economic perspective. In addition, subjecting the solid sorbent to cycles comprising heating, cooling and/or reduced pressure may lead to degradation of the solid sorbent and may require expensive equipment. Further, these regeneration methods may result in a desorbed CO₂ stream of lower purity due to contamination with other gases such as molecular oxygen and nitrogen as a result of air uptake do to the applied vacuum. In addition, these regeneration methods release adsorbed molecular oxygen and nitrogen from the solid support together with releasing the adsorbed CO₂.

It is an object of the present inventors to provide an improved method and system for regeneration of solid sorbents that overcomes at least part of the above-mentioned drawbacks.

Thus, in a first aspect, the present invention is directed to a method for adsorption of CO₂ by a solid sorbent and regeneration of said solid sorbent. The present inventors surprisingly found that this can be achieved by using amine-based liquids.

Accordingly, the method of the present invention comprises the steps of:
a) contacting a CO₂-lean solid sorbent with a CO₂-rich gas stream to transfer CO₂ from the CO₂-rich gas stream to the CO₂-lean solid sorbent, resulting in a CO₂-rich solid sorbent and a CO₂-lean gas stream;
b) contacting the CO₂-rich solid sorbent with a CO₂-lean liquid sorbent comprising an amine to transfer the CO₂ from the CO₂-rich solid sorbent to the CO₂-lean liquid sorbent, resulting in a CO₂-rich liquid sorbent and regeneration of the CO₂-lean solid sorbent.

Multiple steps a) and b) may be carried out sequentially, using the same CO₂-lean solid sorbent, resulting in multiple cycles comprising sequential steps a) and b).

The CO₂-rich gas stream may comprise any gas stream that comprises CO₂. Examples include, but are not limited to air, flue gasses from industrial processes, exhaust gasses and natural gas. The feed gasses may further comprise other gasses such as molecular oxygen and/or molecular nitrogen.

The method of the present invention is particularly suitable for removing CO₂ from CO₂-rich gas streams comprising relatively low concentrations of CO₂ preferably concentrations of below 500 parts per million by volume (ppmv), more preferably concentrations of below 450 ppmv, even more preferably concentrations of below 420 ppmv of CO₂. Gas streams with higher CO₂ concentrations, such as flue gasses, may be treated to remove most of the CO₂ before being used as the CO₂-rich gas stream in the present invention.

Steps a) and b) may favorably be performed without applying heating, cooling and/or a change in pressure during these steps. When the CO₂-rich gas stream comprises air, steps a) and b) may typically be performed at ambient temperature, such as at around 20 °C. When the CO₂-rich gas stream comprises flue gas, the temperature of the CO₂ rich gas stream may be above ambient temperature, such as between 30 and 50 °C, meaning that steps a) and b) may be performed between around 20 °C and 50 °C.

The method is particularly suitable for essentially completely removing CO₂ from the CO₂-rich gas streams. Accordingly, the CO₂-lean gas stream may comprise less than 200 ppmv of CO₂, preferably less than 100 ppmv of CO₂, more preferably less than 50 ppmv of CO₂.

Using a liquid sorbent to desorb CO₂ from the CO₂-rich solid sorbent allows for obtaining a desorbed CO₂ stream of high purity, due to the absence of vacuum and the selective desorption of CO₂. In the event that gases other than CO₂ from the CO₂-rich gas stream are adsorbed by the solid sorbent in step a), these will not be extensively removed by the liquid sorbent in step b), which allows for obtaining a pure CO₂ product stream from the CO2-rich liquid sorbent.

Advantageously, unlike liquid absorption methods employing amine solvents, the method of the present invention eliminates the need for long-term air exposure of the volatile amine-based liquid sorbent, while still making use of its favorable characteristics for absorbing CO₂.

The solid sorbent typically comprise a solid support with a reactive group capable of adsorbing CO₂. The solid support may for instance be a metal-organic framework (MOF), a polymer or a silica-based support, and the reactive group is preferably an amine. Suitable solid sorbents for instance comprise solid support impregnated with polyethylenimine (PEI) or tetraethylenepentamine (TEPA), hyperbranched aminosilica (HAS),divinylbenzene crosslinked polymer with primary amine groups or MOFs containing amine functional groups (see for instance Hosseini and Lashaki, Separation and Purification Technology, 325, 2023, 124580; Lin et al., RSC Adv., 2016,6, 32598-32614; and Kazemi et al. Scientific Reports, 13, 2023, 19891). The solid sorbent may be a conventionally used solid sorbent, as for instance described in Zeeshan et al., Front. Sustain. 4:1167713, Sandu et al., International Journal of Greenhouse Gas Control 111 (2021) 103447, US 10,010,829 and EP2054151A1.

The CO₂-lean liquid has a higher affinity for CO₂ than that of the CO₂-lean solid sorbent in order to achieve the transfer of CO₂ from the CO₂-rich solid sorbent to the CO₂-lean liquid sorbent.

The CO₂-lean liquid sorbent comprising an amine preferably is an aqueous solution comprising an amine. The term "amine" as used herein refers to compounds comprising an amine functional group. The amine preferably comprises a primary or secondary amine functional group, as these are generally more reactive towards CO₂ than tertiary amine groups.

The amine may be an alkanolamine or amino acid. Preferably, the amine is selected from the group of piperazine, monoethanolamine (MEA), methyl diethanolamine (MDEA) or aminomethyl propanol (AMP), lysine, taurine, alanine, or combinations thereof such as a blend comprising 27 wt.% AMP and 13 wt.% piperazine (CESAR1) in water. More preferably the amine is MEA or CESAR1. Advantageously, the amine may be an amine that is known from liquid absorption technologies, as for instance described in Weir et al., International Journal of Greenhouse Gas Control 126 (2023) 103914 , Du et al., International Journal of Greenhouse Gas Control 111 (2021) 103473.

The method may preferably further comprise a CO₂-lean liquid sorbent regeneration step, where the CO₂ is removed from the CO₂-rich liquid sorbent. This step may be performed by any conventional method known in the art, preferably by thermal regeneration, such as by stripping and/or heating the CO₂-rich liquid sorbent. Preferably, at least part of, preferably all of the CO₂-lean liquid sorbent is recycled back into step b).

After regeneration of the CO₂-lean solid sorbent in step b) by contacting said solid sorbent with the CO₂-lean liquid sorbent, some residual amine from the CO₂-rich liquid sorbent may remain present in the CO₂-lean solid sorbent. When multiple cycles comprising sequential steps a) and b) are performed, it is preferred that this residual amine after step b) is removed before step b) is followed by the subsequent step a) in order to prevent the residual amine from contaminating the CO₂-lean gas stream in subsequent step a). This contamination of the CO₂-lean gas stream with residual amine is problematic from an environmental and economic perspective.

Thus, preferably, a cleaning step is performed to remove residual amine originating from the CO₂-lean liquid sorbent using a cleaning liquid, preferably by washing the CO₂-lean solid sorbent with the cleaning liquid and/or by contacting the CO₂-lean gas stream with the cleaning liquid resulting in an amine-rich cleaning liquid, more preferably by washing the CO₂-lean solid sorbent with the cleaning liquid.

The cleaning liquid is preferably an aqueous solution, more preferably demineralized water. The inventors surprisingly found that washing the CO₂-lean solid sorbent with an aqueous solution, resulting in adsorption of water by the solid sorbent, does not have an influence on the capacity of the solid sorbent to absorb CO₂. In fact, adsorption of small quantities of water may avoid CO₂-induced sorbent deactivation (cf. Veneman et al., Energy Procedia 63 (2014) 2336-2345). Therefore, it is not necessary to dry the washed solid sorbent before contacting it with a CO₂-rich gas stream in a subsequent cycle.

As a result of the cleaning step, the CO₂-lean gas stream is essentially free of residual amine, meaning that it may comprises less than 5 ppmv, preferably less than 2.5 ppmv, more preferably less than 1 ppmv, even more preferably less than 0.5 ppmv of the residual amine.

It is preferred that the method comprises a step to remove the amine from the amine-rich cleaning liquid in order to regenerate the cleaning liquid. This may be achieved by any conventional method known in the art, such as by a membrane filtration method, preferably by nanofiltration or reverse osmosis, more preferably by nanofiltration.

A least part of, preferably all of the regenerated cleaning liquid is recycled to be used as the cleaning liquid in the cleaning step.

Advantageously, the method of the present invention may be integrated with methods for absorbing CO₂ from CO₂-rich gas streams comprising high concentrations of CO₂ using liquid sorbents.

Accordingly, in a second aspect, the present invention is directed to a method for the capturing of CO₂ using both a liquid and solid sorbent with integrated regeneration of the liquid sorbent, comprising the method for adsorption of CO₂ by a solid sorbent and regeneration of said solid sorbent as described above, and further comprising:
i) contacting a CO₂-lean second liquid sorbent comprising an amine with a CO₂-rich second gas stream to transfer CO₂ from the CO₂-rich second gas stream to the CO₂-lean second liquid sorbent, resulting in a CO₂-rich second liquid sorbent and a CO₂-lean second gas stream;
ii) combining the CO₂-rich liquid sorbent from step b) with the CO₂-rich second liquid sorbent from step i) into a combined CO₂-rich liquid sorbent
iii) removing CO₂ from the combined CO₂-rich liquid sorbent resulting in a combined CO₂-lean liquid sorbent.
iv) recycling the combined CO₂-lean liquid sorbent to be used as the CO₂-lean liquid sorbent of step b) and/or the CO₂-lean second liquid sorbent of step i).

Liquid-based methods with which the sorption and regeneration as described herein can be integrated are for instance described in Weir et al., International Journal of Greenhouse Gas Control 126 (2023) 103914.

The CO₂-rich second gas stream preferably comprises flue gas or another gas comprising a high concentration of CO₂, such as concentration of at least 1 vol% CO₂, preferably at least 5 vol% CO₂.

Because the CO₂-rich second gas stream typically comprises a high CO₂ concentration, the second CO₂-lean gas stream may still contain a low concentration of CO₂ even if the CO₂ removal was efficient. Therefore, it may be preferred to further integrate the systems. Further integration can be achieved by removing the remaining CO₂ from the second CO₂-lean gas stream with a solid CO₂ sorbent, and regenerating this sorbent in accordance with the method as described herein. This effectively means that the CO₂-rich gas stream of step a) may comprise the CO₂-lean second gas stream of step i).

The second CO₂-lean liquid sorbent from step b) preferably comprises the same type of liquid as the CO₂-lean liquid sorbent that is used in step i). In particular, the second CO₂-lean liquid sorbent preferably comprises the same amine as the CO₂-lean liquid sorbent.

Removing the CO₂ from the combined CO₂-rich liquid sorbent may be performed by any conventional method known in the art, such as by stripping and/or heating the CO₂-rich liquid sorbent.

In a third aspect, the present invention is directed to a system for adsorption of CO₂ by a solid sorbent and regeneration of said solid sorbent for use in the method according to the first aspect of the present invention.

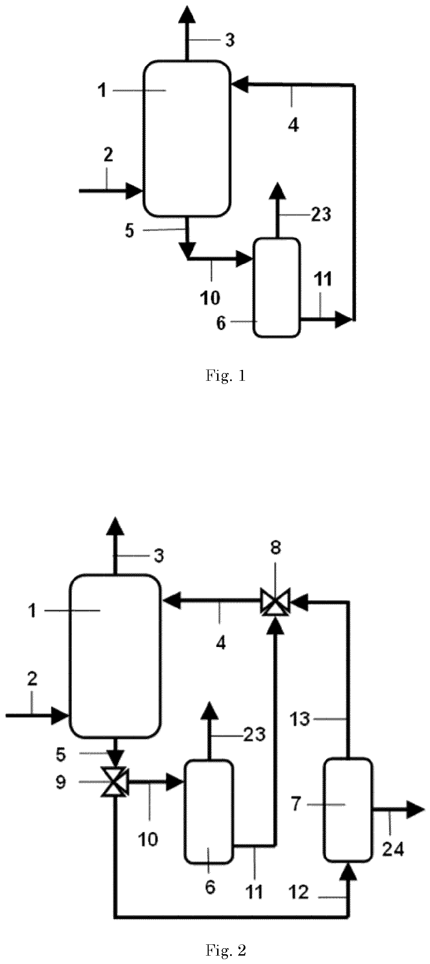

A particular embodiment of the system is schematically illustrated in Figure 1.

The system comprises:
- an adsorption reactor (1) comprising said solid sorbent, further comprising:
   - a gas inlet (2), preferably located at the bottom, through which the CO₂-rich gas stream may be introduced;
   - a gas outlet (3); preferably located at the top, through which the CO₂-lean gas stream may leave the reactor;
   - a first liquid inlet (4); preferably located at the top, through which the CO₂-lean liquid sorbent may be introduced;
   - a first liquid outlet (5) preferably located at the bottom, through which the CO₂-rich liquid sorbent may leave;
- a liquid sorbent regenerator (6), preferably a stripper, comprising:
   - a CO₂-rich liquid sorbent inlet (10);
   - a CO₂-lean liquid sorbent outlet (11);
   - a CO₂ outlet (23)

wherein the first liquid outlet (5) is connected to the CO₂-rich liquid sorbent inlet (10), and;
wherein the CO₂-lean liquid sorbent outlet (11) is connected to the first liquid inlet (4).

The system preferably allows for removing residual amine originating from the CO₂-lean liquid sorbent. Accordingly, in a preferred first embodiment, as schematically illustrated in Figure 2, the system accordingly further comprises:
- a cleaning liquid regenerator (7), preferably comprising a nanofiltration membrane filter or a reverse osmosis filter, more preferably a nanofiltration membrane filter, comprising:
   - an amine-rich cleaning liquid inlet (12), through which the amine-rich cleaning liquid may be introduced;
   - a cleaning liquid outlet (13), through which the cleaning liquid may leave; and
   - an optional amine outlet, through which the amine removed from the amine-rich cleaning liquid may leave (24) and;
wherein the first liquid inlet (4) is operated by a first valve (8) that determines whether the CO₂-lean liquid sorbent or the cleaning liquid is introduced, and wherein the first liquid outlet (5) is operated by a second valve (9) that determines whether the CO₂-rich liquid sorbent or the amine-rich cleaning liquid leaves;

Alternatively, the cleaning liquid may be introduced to the adsorption reactor (1) through a separate liquid inlet and the amine-rich cleaning liquid may leave the adsorption reactor (1) through a separate liquid outlet.

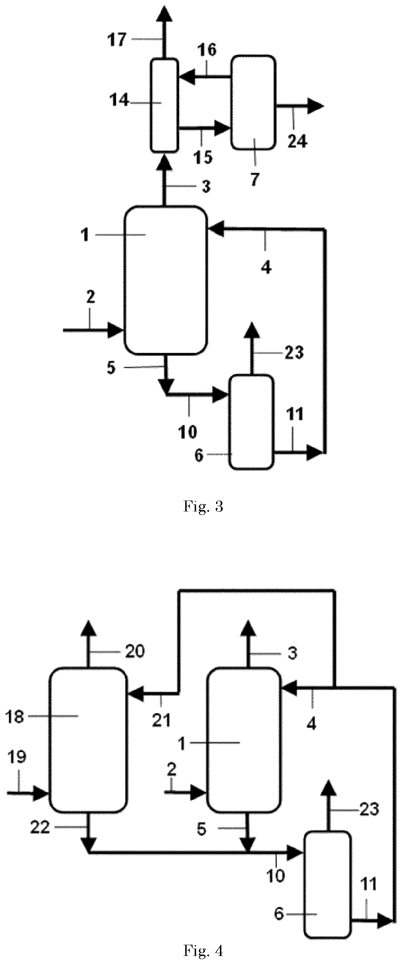

In an alternative embodiment, as schematically illustrated in Figure 3, the system accordingly further comprises:
- a cleaning reactor (14) comprising a cleaning liquid, connected to gas outlet (3), comprising:
   - a cleaning reactor outlet (17), preferably located at the top, through which an amine-lean CO₂-lean gas stream may leave;
- a cleaning liquid regenerator (7), preferably comprising a nanofiltration membrane filter or a reverse osmosis filter, more preferably a nanofiltration membrane filter, comprising:
   - an amine-rich cleaning liquid inlet (15), through which an amine-rich cleaning liquid may be introduced;
   - a cleaning liquid outlet (16), through which a cleaning liquid may leave; and
   - an optional amine outlet (24), through which the amine removed from the amine-rich cleaning liquid may leave;
that are connected to the cleaning reactor (14)

Systems according to the preferred first embodiment, may comprise multiple adsorption reactors (1), such that during removal of residual amine from one adsorption reactor in the cleaning step, at least one other adsorption reactor can be operated to adsorb CO₂ from the CO₂-rich gas stream.

The system may further comprise reservoirs for the CO₂-lean liquid sorbent, the CO₂-rich liquid sorbent, the cleaning liquid and/or the amine-rich cleaning liquid.

The system may also further comprise automated feedback loops. For instance, the system may comprise a feedback loop that regulates the introduction of the CO₂-rich gas stream and the CO₂-lean liquid sorbent, such that when the CO₂ concentration of the CO₂₋lean gas stream, preferably measured at the gas outlet (3) is above a certain concentration, such as above 350 ppmv, the introduction of the CO₂-rich gas stream is paused and the introduction of the CO₂-lean liquid sorbent is started. Another feedback loop may be present that regulates the introduction of the CO₂-lean liquid sorbent and the cleaning liquid, such that when the concentration of CO₂ in the CO₂-rich liquid sorbent is low, such as essentially 0 ppmv, preferably measured at the first liquid outlet (5) the introduction of the CO₂-lean liquid sorbent is paused and the introduction of the cleaning liquid is started. Yet another feedback loop may be present that regulates the introduction of the cleaning liquid and the CO₂-rich gas stream, such that when the concentration of amine in the amine-rich cleaning liquid is measured to be low, such as essentially 0 ppmv, preferably measured at the first liquid outlet (5), the introduction of the cleaning liquid is paused and the introduction of the CO2-rich gas stream is started.

The system may be integrated with a system for absorbing CO₂ from a second CO₂-rich gas streams comprising high concentrations of CO₂ using liquid sorbents. Combining the system of the present invention with such systems, allows for integrated regeneration of liquid sorbent.

Accordingly, in a fourth aspect, the present invention is directed to a system for capture of CO₂ using both a liquid and solid sorbent with integrated regeneration of the liquid sorbent. An embodiment of such system is schematically illustrated in Figure 4. Said system comprises the system for adsorption of CO₂ by a solid sorbent and regeneration of said solid sorbent as described herein-above, and further comprises:
- a second reactor (18) comprising a second liquid sorbent, further comprising:
   - a second gas inlet (19); preferably located at the bottom, through which the second CO₂-rich gas stream may be introduced
   - a second gas outlet (20); preferably located at the top, through which the second CO₂-lean gas stream may leave;
   - a second liquid inlet (21); preferably located at the top, through which a second CO₂-lean liquid sorbent may be introduced
   - a second liquid outlet (22); preferably located at the bottom,
   through which a second CO₂-rich liquid sorbent may leave;

wherein the second liquid outlet (22) is connected to the CO₂-rich liquid sorbent inlet (10), and;
wherein the CO₂-lean liquid sorbent outlet (11) is connected to the second liquid inlet (21).

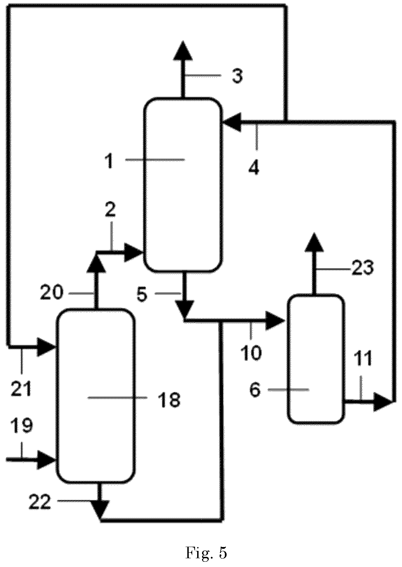

In an alternative embodiment, schematically illustrated in Figure 5, the adsorption reactor (1) is connected to the second reactor (18) by connecting the second gas outlet (20) to the gas inlet (2).

The invention may further be illustrated by the following nonlimiting examples.

### Example 1 - solid sorbent regeneration using liquid sorbent

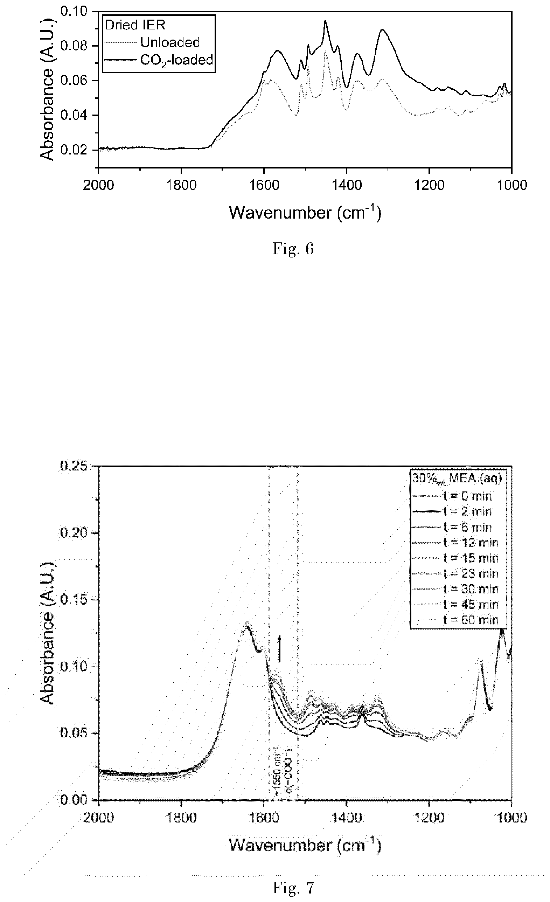

Step a) An amine-based solid sorbent (Lewatit VP OC 1065) was contacted with pure CO₂ gas at room temperature until fully loaded with CO₂. The CO₂ uptake of the solid sorbent was monitored by FTIR focusing on the formation of a carbamate (N-COO⁻) band at approximately 1550 wavenumber (cm⁻¹) (Figure 6).

Step b) After that, the solid sorbent was purged with N₂ to remove unbound CO₂. The CO₂-rich solid sorbent was contacted with an amine-based liquid sorbent (an aqueous solution of 30 wt.% monoethanolamine) at a solid-liquid sorbent ratio of 1.7 for 60 minutes at room temperature to ensure full CO₂ transfer from the CO₂-rich solid sorbent to the liquid sorbent. The CO₂ uptake of the liquid sorbent was monitored over time by FTIR focusing on the formation of a carbamate (N-COO⁻) band at approximately 1550 wavenumber (cm⁻¹) (Figure 7).

### Example 2 - Effect of water wash on solid sorbent

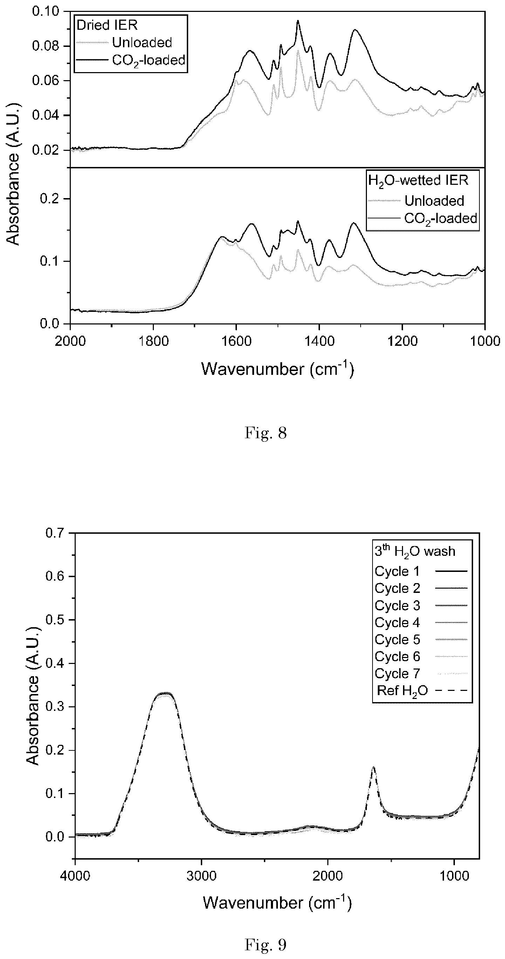

The procedure of step a) of Example 1 was repeated for a solid sorbent after it was wetted with water. The results for both dry and wetted solid sorbent are shown in Figure 8. From these results it is clear that the solid sorbent is efficient in sorbing CO₂ after it was wetted with water.

### Example 3 - multiple cycles

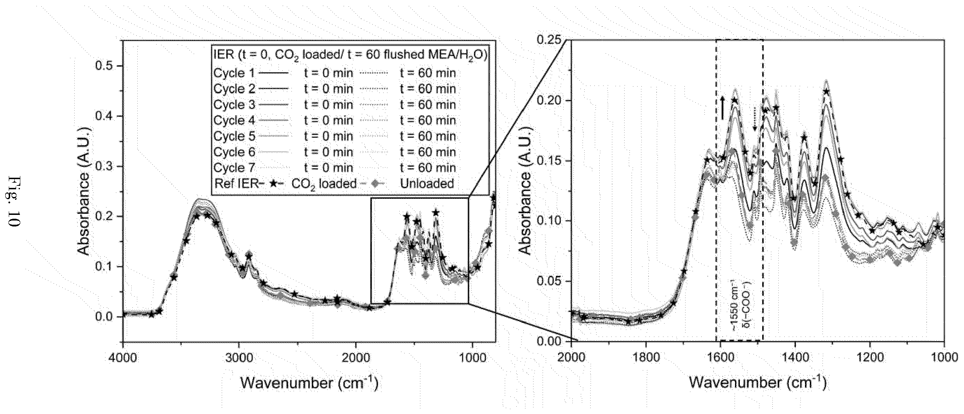

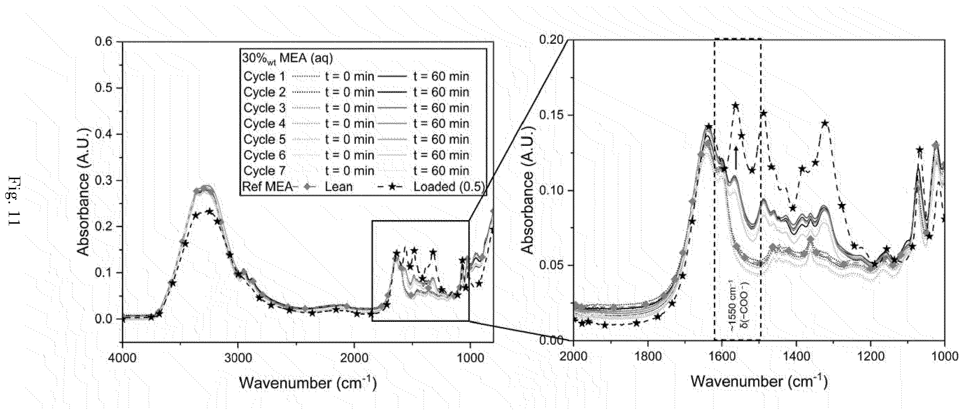

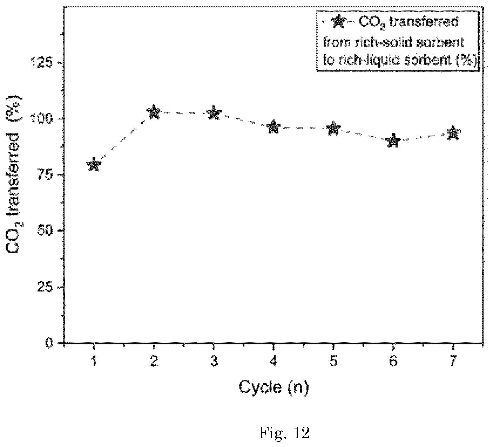

The procedure of steps a) and b) of example 1 was repeated, followed by a cleaning step. The cleaning step is performed by washing the solid sorbent 3 times with 50 mL of demineralized water. The cycle comprising sequential steps a), b) and the cleaning step. The experiment was repeated for 6 more cycles. Figure 9 shows the FTIR spectra of the third wash after each cycle. No amine is observed in these spectra, showing that the liquid sorbent can be efficiently removed from the solid sorbent in every cycle by washing with demineralized water. Figure 10 show the FTIR spectra of the solid sorbent at the beginning (solid lines, CO₂ loaded) and the end (dotted lines, after liquid sorbent wash) of each cycle. Figure 11 shows the FTIR spectra of the liquid sorbent, at the beginning (dotted lines, lean sorbent) and the end (solid lines) of each cycle. From this spectra it can be seen that the performance of the solid resin stays stable over 7 cycles. This can also be seen from Figure 12, where the CO₂ transferred from the CO₂-rich solid sorbent to the liquid sorbent is shown.

## Claims

1. A method for adsorption of CO₂ by a solid sorbent and regeneration of said solid sorbent, wherein said method comprises the steps of:
a) contacting a CO₂-lean solid sorbent with a CO₂-rich gas stream to transfer CO₂ from the CO₂-rich gas stream to the CO₂-lean solid sorbent, resulting in a CO₂-rich solid sorbent and a CO₂-lean gas stream; and
b) contacting the CO₂-rich solid sorbent with a CO₂-lean liquid sorbent comprising an amine to transfer the CO₂ from the CO₂-rich solid sorbent to the CO₂-lean liquid sorbent, resulting in a CO₂-rich liquid sorbent and regeneration of the CO₂-lean solid sorbent.

2. The method according to claim 1, wherein multiple steps a) and b) may be carried out sequentially, using the same CO₂-lean solid sorbent, resulting in multiple cycles comprising sequential steps a) and b).

3. The method according to any of the previous claims, wherein the CO₂-rich gas stream comprises a flue gas or air and/or wherein the CO₂-rich gas stream comprises 500 ppmv or less, preferably 450 ppmv or less, more preferably 400 ppmv or less of CO₂.

4. The method according to any of the previous claims, wherein the solid sorbent comprises a solid support with a reactive group capable of adsorbing CO₂, wherein the solid support preferably is a metal-organic framework, a polymer or a silica-based support, and wherein the reactive group preferably is an amine.

5. The method according to claim 4, wherein the solid sorbent comprises polyethylenimine (PEI), tetraethylenepentamine (TEPA), hyperbranched aminosilica (HAS) or divinylbenzene crosslinked polymer with primary amine groups.

6. The method according to any of the previous claims, wherein the CO₂-lean liquid sorbent comprising an amine is an aqueous solution comprising an amine.

7. The method according to any of the previous claims, wherein the amine comprises an alkanolamine and/or an amino acid, preferably piperazine, monoethanolamine (MEA), methyl diethanolamine (MDEA), aminomethyl propanol (AMP), lysine, taurine, alanine, or combinations thereof such as a blend of AMP and piperazine, more preferably MEA or a blend of AMP and piperazine.

8. The method according to any of the previous claims, wherein the amine comprises a primary or secondary amine functional group.

9. The method according to any of the previous claims, wherein the CO₂-lean gas stream comprises less than 200 ppmv, preferably less than 100 ppmv, more preferably less than 50 ppmv of CO₂

10. The method according to any of the previous claims, further comprising a cleaning step to remove residual amine originating from the CO₂-lean liquid sorbent using a cleaning liquid, preferably by washing the CO₂-lean solid sorbent with the cleaning liquid and/or by contacting the CO₂-lean gas stream with the cleaning liquid resulting in an amine-rich cleaning liquid, more preferably by washing the CO₂-lean solid sorbent with the cleaning liquid.

11. The method according to claim 10, wherein the cleaning liquid is an aqueous solution, preferably demineralized water.

12. The method according to claim 10 or 11, wherein the CO₂-lean gas stream comprises less than 5 ppmv , preferably less than 2.5 ppmv, more preferably less than 1 ppmv, even more preferably less than 0.5 ppmv of the residual amine.

13. The method according to any of claim 10-12, wherein the residual amine is removed from the amine-rich cleaning liquid to regenerate the cleaning liquid, preferably by nanofiltration or reverse osmosis, more preferably by nanofiltration.

14. The method according to claims 11 or 13, wherein at least part of, preferably all of the cleaning liquid is recycled to be used in the cleaning step of claim 12.

15. The method according to any of the previous claims, further comprising a CO₂-lean liquid sorbent regeneration step, wherein the CO₂ is removed from the CO₂-rich liquid sorbent in order to regenerate the CO₂-lean liquid sorbent, preferably by heating and/or stripping of the CO₂-rich liquid sorbent.

16. The method according to claim 15, wherein at least part of, preferably all of the CO₂-lean liquid sorbent is recycled into step b).

17. The method according to any of the previous claims, wherein steps a) and step b) are performed at about 1 bar pressure and about 20 to 50 °C.

18. A method for capture of CO₂ using both a liquid and solid sorbent with integrated regeneration of the liquid sorbent, said method comprising the method for adsorption of CO₂ by a solid sorbent and regeneration of said solid sorbent according to any of the previous claims, and further comprising the steps of:
i) contacting a CO₂-lean second liquid sorbent comprising an amine with a CO₂-rich second gas stream to transfer CO₂ from the CO₂-rich second gas stream to the CO₂-lean second liquid sorbent, resulting in a CO₂-rich second liquid sorbent and a CO₂-lean second gas stream;
wherein the CO₂-rich second gas stream preferably comprises flue gas, and;
wherein the CO₂-lean liquid sorbent from step b) preferably comprises the same type of liquid as the second CO₂-lean liquid sorbent;
ii) combining the CO₂-rich liquid sorbent from step b) with the CO₂-rich second liquid sorbent from step i) into a combined CO₂-rich liquid sorbent
iii) removing CO₂ from the combined CO₂-rich liquid sorbent resulting in a combined CO₂-lean liquid sorbent,
wherein removing the CO₂ is preferably done by heating and/or stripping of the CO₂-rich liquid sorbent;
iv) recycling the combined CO₂-lean liquid sorbent to be used as the CO₂-lean liquid sorbent of step b) and/or the CO₂-lean second liquid sorbent of step i).

19. A system for adsorption of CO₂ by a solid sorbent and regeneration of said solid sorbent according to the method of any of claims 1-18, said system comprising:
- an adsorption reactor (1) comprising said solid sorbent, further comprising:
- a gas inlet (2), preferably located at the bottom, through which the CO₂-rich gas stream may be introduced;
- a gas outlet (3); preferably located at the top, through which the CO₂-lean gas stream may leave;
- a first liquid inlet (4); preferably located at the top, through which the CO₂-lean liquid sorbent may be introduced
- a first liquid outlet (5) preferably located at the bottom, through which the CO₂-rich liquid sorbent may leave;
- a liquid sorbent regenerator (6), preferably a stripper, comprising:
- a CO₂-rich liquid sorbent inlet (10);
- a CO₂-lean liquid sorbent outlet (11);
- a CO₂ outlet (23);
wherein the first liquid outlet (5) is connected to the CO₂-rich liquid sorbent inlet (10), and;
wherein the CO₂-lean liquid sorbent outlet (11) is connected to the first liquid inlet (4).

20. A system for sorption of CO₂ from two different CO₂-rich gas streams with integrated regeneration of liquid sorbent in accordance with the method of claim 18, said system comprising the system according claim 19 and further comprising:
- a second reactor (18) comprising a second liquid sorbent, further comprising:
- a second gas inlet (19); preferably located at the bottom, through which the second CO₂-rich gas stream may be introduced
- a second gas outlet (20); preferably located at the top, through which the second CO₂-lean gas stream may leave;
- a second liquid inlet (21); preferably located at the top, through which a second CO₂-lean liquid sorbent may be introduced
- a second liquid outlet (22); preferably located at the bottom, through which a second CO₂-rich liquid sorbent may leave;
wherein the second liquid outlet (22) is connected to the CO₂-rich liquid sorbent inlet (10), and;
wherein the CO₂-lean liquid sorbent outlet (11) is connected to the second liquid inlet (21).
